# FASCICULE DE BREVET EUROPEEN

(11) **EP 2 591 842 B1**
(45) Date de publication et mention de la délivrance du brevet: **13.06.2018**
(21) Numéro de dépôt: 12290364.4
(22) Date de dépôt: 24.10.2012
(51) Int. Cl.: B01D 53/02, B01D 53/48, B01D 53/52, B01J 20/06, C01B 3/56, C10K 1/00

(54) **Procédé de captation d'impuretés soufrées mettant en oeuvre des masses de captation specifiques**
Verfahren zum Abtrennen von schwefelhaltigen Unreinheiten mittels spezifischer Abtrennmassen
Method for trapping sulphurous impurities using specific trapping masses

(30) Priorité: 10.11.2011 FR 1160296
(43) Date de publication de la demande: 15.05.2013
(73) Titulaire: Centre National de la Recherche Scientifique (C.N.R.S.), 75794 Paris Cedex 16 (FR); IFP Energies nouvelles, 92500 Rueil-Malmaison (FR)
(72) Inventeur: Girard, Vincent, 72230 Ruaudin (FR); Bazar-Bachi, Delphine, 69540 Irigny (FR); Chiche, David, 69007 Lyon (FR); Baudot, Arnaud, 69390 Vernaison (FR); Geantet, Christophe, 01700 Miribel (FR)
(74) Mandataire: Schmitt, Nicolas A.J.

(56) Documents cités:
- US-A- 4 729 889
- US-A- 5 252 528
- US-A- 5 439 867
- US-A1- 2008 271 602
- EDWIN SURESH RAJ A M ET AL: "Zinc(II) oxide-zinc(II) molybdate composite humidity sensor", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, vol. 81, no. 2-3, 5 janvier 2002 (2002-01-05), pages 229-236, XP027370074, ISSN: 0925-4005 [extrait le 2002-01-05]
- JOTHIMURUGESAN K ET AL: "REGENERATION OF ZINC TITANATE H2S SORBENTS", INDUSTRIAL & ENGINEERING CHEMISTRY RESEARCH, AMERICAN CHEMICAL SOCIETY, US, vol. 37, no. 5, 1 May 1998 (1998-05-01), pages 1929-1933, XP000740945, ISSN: 0888-5885, DOI: 10.1021/IE970857D

## Description

La présente invention a pour objet un procédé de captation d'impuretés soufrées telles que l'H₂S et/ou le COS et/ou le CS₂, contenues dans des charges gazeuses telles que du gaz naturel ou des gaz de synthèse, et plus particulièrement des gaz comprenant de l'H₂ et/ou du CO.

Les impuretés soufrées sont présentes dans un grand nombre de gaz industriels, par exemple les effluents de la réaction de Claus, le gaz naturel, les gaz de synthèse, et les charges d'hydrocarbures destinées au réformage à la vapeur, à la production d'hydrogène ou à la production de gaz de synthèse par oxydation ménagée.

Les gaz de synthèse, par exemple, sont classiquement obtenus pas transformation du gaz naturel, du charbon, de résidus pétroliers lourds ou de la biomasse par des procédés tels que le vaporéformage, le réformage autotherme, l'oxydation partielle, ou encore par décomposition du méthanol. Les gaz de synthèse peuvent également être obtenus par gazéification de mélange de biomasse et/ou charbon et/ou résidu pétroliers (gaz de synthèse obtenus par co-traitement, ou "co-processing" selon la terminologie anglo-saxonne). Ces gaz de synthèse comprennent le plus souvent du monoxyde de carbone, de l'hydrogène, de la vapeur d'eau et du dioxyde de carbone. Selon la nature de la charge à partir de laquelle ils ont été obtenus, les gaz de synthèse peuvent contenir des teneurs variables en impuretés soufrées telles que l' H₂S et/ou le COS et/ou le CS₂.

Dans les procédés de synthèse Fischer-Tropsch, ces impuretés sont susceptibles d'empoisonner les catalyseurs mis en oeuvre. En outre, les composés soufrés peuvent atténuer les performances des matériaux utilisés dans les piles à combustibles. Enfin, les impuretés soufrées présentes dans les gaz industriels, et notamment les gaz de synthèse, peuvent engendrer un certain nombre de problèmes lors de l'utilisation de ces gaz.

En effet, lorsqu'ils sont mis en oeuvre, par exemple, dans des turbines à gaz dans les unités de cogénération de gaz de synthèse et d'électricité (IGCC ou "Integrated Gasification Combined Cycle" selon la terminologie anglo-saxonne), les impuretés soufrées peuvent entraîner une corrosion accélérée des installations. En outre, les gaz issus d'une installation de cogénération doivent également répondre à des spécifications bien particulières, liées aux exigences des procédés placés en aval ou à des contraintes environnementales.

A ce titre, les exigences en termes de pureté des gaz sont très sévères. Certaines applications, telles que par exemple la synthèse Fischer-Tropsch, imposent des teneurs en H₂S généralement inférieures à 10 ppb en poids.

L'utilisation d'un solide absorbant l'H₂S (ou masse de captation) est l'une des techniques communément utilisée pour éliminer les impuretés soufrées des charges gazeuses. Selon cette technique, les impuretés à éliminer interagissent chimiquement avec des oxydes métalliques contenus dans la masse de captation pour former des sulfures. Parmi les solides utilisés comme masse de captation, on peut citer les solides à base de cuivre, de zinc, de magnésium, de fer ou de manganèse. L'alumine et la silice peuvent, par ailleurs, être utilisées comme support ou liant.

Lors des traitements pour l'élimination de composés soufrés présents dans des charges gazeuses, ces solides se sulfurent, et perdent progressivement leurs propriétés. Il est donc nécessaire, d'une part, d'utiliser des quantités importantes de solides absorbants - ce qui est coûteux et impose des installations surdimensionnées - et, d'autre part, de régénérer les solides sulfurés.

La régénération peut se faire in-situ ou ex-situ. Ex-situ, elle pose des problématiques techniques pour la continuité du procédé de désulfurisation, puisque le solide doit être extrait du réacteur pour être recyclé. In-situ, la régénération peut être opérée par voie oxydante, par mise en contact de la masse sulfurée avec un gaz comprenant de l'oxygène. L'oxygène interagit chimiquement avec les oxydes métalliques sulfurés de la masse de captation usagée de manière à reformer des oxydes métalliques.

Le document US-B-4,729,889 décrit, par exemple, des masses de captation d'H₂S régénérables pouvant être utilisées dans des réactions de désulfuration à haute température. Ces masses de captation comprennent des phases oxydes métalliques binaires présentant la particularité de former un eutectique à la température de désulfurisation. Ainsi, la phase d'oxydes métalliques binaires fond au cours de la réaction de désulfuration (autour de 700°C) de manière à favoriser l'absorption d'H₂S.

Le document US-B-5,252,528 propose, quant à lui, d'autres masses de captation d'H₂S régénérables pouvant être utilisées dans des réactions de désulfuration à haute température. Ces masses de captation comprennent de 1 à 20% en poids de phase oxyde métallique binaire et sont régénérables à des températures allant de 550 à 700°C.

Cependant, ces masses de captation ne sont pas adaptées aux procédés de désulfuration plus modérés, opérés notamment à des températures inférieures à 450°C car l'écart des températures entre la réaction de désulfuration et la réaction de régénération est trop important. Cette différence de température a en effet un impact négatif sur l'efficacité énergétique globale du procédé.

Il existe donc un besoin pour des procédés de désulfuration de charges gazeuses opérés à une température modérée, notamment inférieure à 450°C, au moyen de masses de captation facilement régénérables in-situ. Les documents D1 (US5252528) et D2 (US4729889) décrivent des procédés de captation d'impuretés soufrées contenues dans un gaz au moyen d'une masse de captation. D1 propose d'effectuer une régénération de la masse de captation à une température comprise entre 550°C et 700°C et D2 propose d'effectuer une régénération de la masse de captation à une température comprise entre 500°C et 700°C.

La demanderesse a découvert qu'il était possible de mettre en oeuvre un tel procédé au moyen de masses de captation spécifiques régénérables à des températures allant de 300 à 480°C.

Ainsi, l'invention a pour objet, selon un premier aspect, un procédé de captation d'impuretés soufrées, telles que l'H₂S et/ou le COS et/ou le CS₂, présentes dans des charges gazeuses telles que du gaz naturel ou des gaz de synthèse, et plus particulièrement des gaz contenant de l'H₂ et/ou du CO, comprenant :
a. la désulfuration par mise en contact, à une température allant de 20 à 450°C, de la charge à traiter avec une masse de captation renfermant une phase active d'oxyde mixte ZnMoO₄
b. optionnellement, l'inertage de la masse de captation sulfurée,
c. la régénération par voie oxydante de ladite masse de captation, opérée par mise en contact de la masse de captation à régénérer avec un gaz comprenant une teneur allant de 5 à 20% d'O₂ ;
d. optionnellement, l'inertage de la masse de captation régénérée, et
e. la désulfuration par mise en contact, à une température allant de 20 à 450°C, de la charge à traiter avec ladite masse de captation régénérée et inertée,
ladite masse de captation étant régénérée à une température allant de 300 à 480°C.

### Charge gazeuse

Le procédé selon l'invention peut être utilisé pour purifier toutes charges gazeuses contenant, entre autres, des composés soufrés tels que l'H₂S et/ou le COS et/ou le CS₂.

Parmi les charges gazeuses pouvant être traitées par le procédé de l'invention, on peut citer les gaz de synthèse comprenant de l'H₂ et/ou du CO, et éventuellement les gaz naturels.

Selon un mode préféré de réalisation, les charges traitées par le procédé selon l'invention sont des gaz de synthèse comprenant de l'H₂ et/ou du CO.

### Mise en oeuvre du procédé

Le procédé selon l'invention peut, par exemple, être utilisé pour purifier des charges gazeuses mises en oeuvre dans les installations de cogénération (telles que les centrales IGCC, selon la terminologie anglo-saxonne), dans les unités de synthèse chimique telles que les unités de synthèse du méthanol, ou les unités de synthèse Fischer-Tropsch.

La désulfuration peut être mise en oeuvre dans différents types de réacteurs, par exemple, dans un réacteur en lit fixe, en lit circulant, un réacteur radial, ou un réacteur en lit fluidisé.

Dans le cas des technologies de réacteur en lit fixe, de réacteur radial ou de réacteur en lit fluidisé, plusieurs réacteurs peuvent éventuellement être associés et fonctionner en parallèle.

Selon ce mode de mise en oeuvre, les réacteurs peuvent fonctionner de manière alternative et en déphasage, tel que un ou plusieurs réacteurs puissent être utilisés afin de désulfurer la charge à traiter, pendant que un ou plusieurs réacteurs sont en mode d'inertage et/ou de régénération de la masse de captation déjà utilisée lors d'une précédente étape de désulfuration. Dans ce mode de fonctionnement, le procédé selon l'invention est toujours opérationnel pour la désulfuration de la charge à traiter.

Dans les applications mettant en oeuvre des réacteurs de type lit circulant, au moins deux réacteurs peuvent être associés de la manière suivante. La masse de captation active, c'est-à-dire contenant les d'oxydes métalliques, est introduite dans le fond d'un réacteur tubulaire vertical n°1 avec une charge gazeuse à dépolluer. L'étape de désulfuration de la charge gazeuse s'opère dans ce réacteur n°1.

Le débit ascensionnel de la charge de gaz à dépolluer est choisi de manière à véhiculer et évacuer la masse de captation vers le haut du réacteur. La sortie haute du réacteur est équipée d'un système permettant de séparer la masse de captation du gaz désulfuré.

Les équipements mettant en oeuvre une séparation solides/gaz selon un mode gravitationnel sont préférés, en particulier les géométries de séparation de type "cyclone".

La masse de captation sulfurée descend ensuite par gravité dans un second réacteur tubulaire dans lequel se produit la régénération de la masse de captation. La circulation du solide et du fluide de régénération contenant de l'oxygène dans le réacteur de régénération est effectuée de manière ascensionnelle ou gravitationnelle.

Le sens de circulation du fluide en fonction du solide peut être en co-courant (lorsque le sens de circulation est ascensionnel par exemple) ou à contre-courant (si le sens de circulation du solide est gravitationnel par exemple).

La masse de captation régénérée est ensuite séparée du gaz de régénération appauvri en oxygène au moyen d'une séparation solides/gaz. La masse de captation est ensuite réintroduite dans le réacteur de désulfuration tel que décrit précédemment.

Les conditions opératoires concernant l'étape de désulfuration ou l'étape de régénération sont identiques à celles développées dans la description.

### Désulfuration

La première étape du procédé selon l'invention consiste en la désulfuration (ou purification) de la charge gazeuse à traiter, par mise en contact de la charge gazeuse à traiter avec ladite masse de captation dans un réacteur.

L'étape de désulfuration est opérée par mise en contact, à une température allant de 20 à 450°C, de la charge à traiter avec une masse de captation renfermant une phase active d'oxyde mixte ZnMoO₄.

Selon un mode préféré de réalisation, la désulfuration de la charge à traiter est conduite à une température allant de 50 à 450°C, de préférence de 100 à 350°C.

En outre, la désulfuration de la charge peut être mise en oeuvre à une pression allant de 1 à 250 bar, de préférence de 10 à 150 bar, et plus préférentiellement de 15 à 80 bar.

Dans cette étape, la charge est avantageusement introduite dans le réacteur à une vitesse volumique horaire (VVH, calculée en rapportant le débit réel du gaz aux conditions opératoires du procédé sur le volume du réacteur) allant de 100 à 20 000h⁻¹, de préférence de 200 à 5 000h⁻¹, et plus préférentiellement de 300 à 3 000h⁻¹.

Selon un mode particulier de réalisation, lorsque le procédé selon l'invention est utilisé pour purifier la charge d'une unité de synthèse Fischer-Tropsch, l'étape de désulfuration du gaz de synthèse est de préférence mise en oeuvre à une pression allant de 10 à 100 bar, et à une température allant de 100 à 280°C.

Selon un autre mode de réalisation, dans le cadre de la synthèse de méthanol, l'étape de désulfuration est généralement mise en oeuvre à une pression allant de 10 à 150 bar, de préférence de 50 à 100 bar et à une température allant de 150 à 300°C, de préférence de 220 à 280°C.

Enfin, selon encore un autre mode de réalisation, lorsque le procédé selon l'invention est mis en oeuvre dans une installation de cogénération, l'étape de désulfuration est généralement opérée à une pression allant de 1 à 150 bar, de préférence de 15 à 50 bar, à une température allant de 150°C à 450°C, de préférence de 170 à 350°C.

### Régénération de la masse de captation

Le procédé selon l'invention comprend, en outre, une étape de régénération par voie oxydante de la masse de captation sulfurée à une température allant de 300 à 480°C et plus particulièrement de 300°C à 450°C.

L'étape de régénération est mise en oeuvre par mise en contact du solide sulfuré avec un gaz contenant de l'oxygène.

Le gaz de régénération comprend de 5% à 20% en volume d'oxygène.

L'étape de régénération est, de préférence, mise en oeuvre à une pression allant de 0,1 à 10 bar, de préférence de 0,1 à 5 bar, de préférence encore de 1 à 3 bar.

Dans cette étape, le gaz de régénération est avantageusement introduit dans le réacteur à une vitesse volumique horaire (VVH, calculée en rapportant le débit réel du gaz aux conditions opératoires du procédé sur le volume du réacteur) comprise entre 100 h⁻¹ et 20 000 h⁻¹, de préférence entre 200 h⁻¹ et 5 000 h⁻¹, de préférence entre 300 h⁻¹ et 3 000 h⁻¹.

### Inertage

Le procédé selon l'invention peut comprendre, en outre, une étape d'inertage de la masse de captation sulfurée obtenue après l'étape de désulfuration, ou de la masse de captation régénérée obtenue après l'étape de régénération.

En effet, une fois les étapes de désulfuration ou de régénération terminées, la masse absorbante peut être inertée par mise en contact de la masse de captation avec un gaz inerte, de préférence l'azote, notamment à une pression allant de 0,1 à 10 bar, de préférence de 0,5 à 3 bar.

Cette étape peut notamment être mise en oeuvre par passage, dans le réacteur, d'un gaz inerte (par exemple l'azote), de préférence à une température comprise entre les températures de mise en oeuvre des étapes de désulfuration et de régénération.

Les étapes d'inertage peuvent notamment être mise en oeuvre dans les réacteurs en lit fixe, les réacteurs radiaux, ou les réacteurs en lit fluidisé, mais sont notamment superflues lorsque la réaction est conduite dans des réacteurs de technologie de type « lit circulant ».

### Masse de captation

Le procédé de captation d'impuretés soufrées selon l'invention met en oeuvre une masse de captation renfermant une phase active d'oxyde mixte ZnMoO₄.

En effet, il est du mérite de la demanderesse d'avoir mis en évidence qu'une telle masse de captation présentaint de bonnes capacités de captation des impuretés soufrées (notamment l'H₂S) à des températures modérées, notamment inférieures à 450°C, et pouvaient être régénérée à des températures très faibles (allant de 300 à 480°C).

L'oxyde mixte ZnMoO₄ se distingue par l'apparition d'une phase de type spinelle, perovskite ou de toute autre phase intégrant sous forme de solution solide le zinc et le molybdène.

La nature de la phase oxyde peut être caractérisée par des méthodes connues, et notamment la diffraction des rayons X. La détermination de la nature des phases cristallines (simples ou mixtes) peut être effectuée par comparaison des diffractogrammes expérimentaux avec les fichiers des bases de données de diagrammes de diffraction des rayons X de l'ICDD (International Centre for Diffraction Data).

En particulier, la masse de captation utilisée dans le cadre du procédé selon l'invention permet notamment d'absorber les composés soufrés, et notamment l'H₂S plus efficacement que des masses de captation comprenant une phase oxyde simple constituée soit de zinc soit de molybdène. Elle peut en outre être régénérée à des températures moins élevées, réduisant ainsi significativement l'écart de température entre la réaction de désulfuration et la réaction de régénération, ce qui contribue à une meilleure efficacité énergétique du procédé de désulfuration.

De nombreuses méthodes permettant d'obtenir les oxydes métalliques de zinc sont décrites dans la littérature, par exemple par décomposition des précurseurs métalliques, par voie sol-gel, par précipitation en milieu aqueux, via les méthodes par complexation, de synthèse par autocombustion, ou les procédés Pechini. Ces oxydes peuvent être également d'origine commerciale.

L'oxyde de zinc peut, par exemple, être obtenu commercialement, et peut être issu de deux grands procédés industriels de fabrication: le procédé indirect (ou procédé français) et le procédé direct (ou américain).

Initialement préféré, le procédé français consiste, à la base, en un chauffage du zinc au voisinage de son point d'ébullition. Les vapeurs ainsi générées sont oxydées par combustion dans l'air. La fleur de zinc est aspirée par des ventilateurs et envoyée dans de grandes chambres où les particules se trouvent classifiées grâce à des cloisons en fonction de leur taille. Ce procédé conduit à des produits d'une très grande pureté dont la qualité ne dépend que de la pureté initiale du métal.

L'origine du procédé direct remonte à 1852 (The New Jersey Zinc Company). Dans ce cas, la matière première est le minerai de zinc, c'est à dire souvent des sulfures, des carbonates ou des silicates de zinc. Ce minerai, mélangé à du charbon est chargé dans un four où circule un courant d'air. La chaleur issue de la combustion du charbon permet la réduction du minerai et la volatilisation du zinc. Ces vapeurs sont alors oxydées par l'anhydride carbonique ou l'oxygène envoyé en excès. Comme pour le procédé français, les fumées d'oxyde sont aspirées et conduites dans de vastes espaces pour récupérer des particules classifiées par taille. Bien plus économique, ce procédé conduit toutefois à un oxyde de zinc moins pur.

De nombreuses autres méthodes de préparation sont décrites dans la littérature, par exemple, par déshydratation d'hydroxyde de zinc obtenu par précipitation, par décomposition des différents précurseurs du zinc, qu'ils soient commerciaux ou obtenus par une précipitation préliminaire.

De nombreuses méthodes permettant d'obtenir l'oxyde mixte ZnMoO₄ sont décrites dans la littérature, tels que par exemple par décomposition des précurseurs métalliques, par mélange et calcination des oxydes simples correspondants, par broyage et calcination des oxydes simples correspondants, par voie sol-gel, par précipitation en milieu aqueux, via les méthodes par complexation, de synthèse par autocombustion, ou les procédés Pechini. Ces oxydes peuvent être également d'origine commerciale.

La phase active de la masse de captation peut, par exemple, représenter de 30 à 100% en poids, par rapport au poids total de la masse de captation, de préférence de 40 à 95% en poids, et plus préférentiellement de 50 à 90% en poids. Le fait de comporter une teneur en phase active supérieure à 30% poids, de préférence supérieure à 40% poids, voire supérieure à 50% poids, par rapport au poids total de la masse de captation, permet de faciliter la régénération dans une gamme de température relativement basse telle que définie selon l'invention. En effet, le fait d'avoir une haute teneur (c'est-à-dire une teneur supérieure à 30% poids, de préférence supérieure à 40% poids, voire supérieure à 50% poids) en phase active permet de concentrer l'effet exothermique de la régénération par voie oxydante sur la masse de captation selon l'invention, et donc de diminuer la température de régénération.

Lorsque la phase active ne représente pas 100% de la masse de captation, cette dernière peut notamment comprendre au moins une charge minérale servant de liant ou de support, afin de faciliter sa mise en forme et de lui conférer une bonne résistance mécanique.

Cette charge minérale peut notamment être une alumine ou un précurseur d'alumine, de la silice, une silice-alumine, une argile (bentonite, kaolinite, la montmorillonite ou la smectite), une zircone ou un oxyde de titane.

De préférence, la charge minérale est une alumine, plus préférentiellement une alumine alpha, et/ou une argile (bentonite, kaolinite, la montmorillonite ou la smectite), par exemple l'argile de Provins.

On pourra avantageusement utiliser en outre un adjuvant organique (éliminé lors de l'étape de calcination de la masse de captation) tels que les dérivés de cellulose, les polyéthylène glycols, les acides aliphatiques mono-carboxyliques, les composés aromatiques alkylés, les sels d'acide sulphonique, les acides gras, la polyvinyl pyridine, l'alcool polyvinylique, la methylcellulose et autres additifs connus de l'homme du métier.

La charge minérale peut être présente dans la masse de captation à une teneur allant de 0,1 à 70% en poids, de préférence de 5 à 60% en poids, et plus préférentiellement de 10 à 50% en poids, par rapport au poids total du solide.

La masse de captation peut, par ailleurs, se présenter sous la forme de granulés, compacts, extrudés, de billes ou de monolithes.

### Préparation des masses de captation

Les masses de captation utilisées dans le cadre du procédé selon l'invention peuvent être mises en forme par toutes techniques communément employées et permettant l'obtention d'oxydes mixtes binaires, par exemple extrusion, pastillage, granulation, atomisation, etc.

Selon un aspect particulièrement préféré de l'invention, les masses de captation peuvent être obtenues par un procédé de co-malaxage d'oxydes, extrusion comprenant les étapes suivantes :
a. pré-mélange des oxydes de zinc et de molybdène ou de l'oxyde mixte ZnMoO₄ ou de leurs précurseurs sous forme de poudre,
b. optionnellement, ajout d'une charge minérale, par exemple choisie parmi alumine, argiles, silice, oxyde de titane, en une teneur allant de 0,1 à 70% en poids, de préférence de 5 à 60% en poids, et plus préférentiellement de 10 à 50% en poids, par rapport au poids total du solide,
c. préparation d'une pâte par mise en contact des poudres pré-mélangées, et d'une solution contenant éventuellement un agent peptisant acide ou basique, conduisant à l'obtention d'une pâte (peptisation),
d. malaxage de la pâte ainsi obtenue,
e. extrusion de la pâte à une pression allant de 3 à 10 MPa,
f. séchage des extrudés obtenus à l'étape c) à une température allant de 70 à 160°C pendant une durée de 1 à 24 heures,
g. calcination des extrudés séchés à une température allant de 200 à 800°C pendant une durée allant de 1 à 6 heures, sous un flux gazeux comprenant de l'oxygène.

L'agent peptisant acide ou basique utilisé à l'étape c permet notamment de favoriser la redispersion des poudres.

On pourra avantageusement remplacer les étapes de malaxage et d'extrusion par une étape de compactage, une granulation ou toute méthode connue de l'homme du métier permettant de générer des objets millimétriques (par exemple allant de 0,8 à 4 mm, de préférence de 1 à 3mm), à partir du pré-mélange de poudres de l'étape a).

Selon un autre mode de réalisation, les masses de captation peuvent être obtenues par un procédé de malaxage extrusion à partir d'un oxyde et d'un précurseur en solution d'au moins un oxyde de molybdène, comprenant les étapes suivantes :
a. pré-mélange d'un oxyde de zinc, et d'un précurseur d'au moins un oxyde de molybdène,
b. optionnellement, ajout d'une charge minérale, par exemple choisie parmi alumine, argiles, silice, oxyde de titane, en une teneur allant de 0,1 à 70% en poids, de préférence de 5 à 60% en poids, et plus préférentiellement de 10 à 50% en poids, par rapport au poids total du solide,
c. préparation d'une pâte par mise en contact des poudres pré-mélangées, et d'une solution contenant éventuellement un agent peptisant acide ou basique, conduisant à l'obtention d'une pâte (peptisation),
d. malaxage de la pâte ainsi obtenue,
e. extrusion de la pâte à une pression allant de 3 à 10 MPa,
f. séchage des extrudés obtenus à l'étape e) à une température allant de 70 à 160°C pendant une durée de 1 à 24 heures,
g. calcination des extrudés séchés à une température allant de 200 à 800°C pendant une durée de 1 à 6 heures, sous un flux gazeux comprenant de l'oxygène.

Dans ce procédé, le précurseur de molybdène peut être additionné non pas sous forme de poudre, mais après dispersion ou solubilisation dans la solution utilisée à l'étape c.

On pourra avantageusement utiliser ce mode opératoire pour préparer une masse de captation à partir d'une poudre d'oxyde de molybdène et d'un précurseur d'oxydes de zinc.

Selon encore un autre mode de réalisation, les masses de captation peuvent être obtenues par un autre procédé, comprenant les étapes suivantes :
a. mise en forme d'un oxyde de zinc (par pastillage, malaxage extrusion, granulation...), de manière à obtenir des grains de taille millimétrique (par exemple allant de 0,8 à 4 mm, de préférence de 1 à 3mm), ou utilisation d'un oxyde de zinc sous forme de grain de taille et résistance compatible avec une utilisation dans un réacteur à lit fixe,
b. imprégnation d'un précurseur de molybdène sur le support d'oxyde de zinc,
c. maturation,
d. séchage à une température allant de 80 à 200°C, préférentiellement de 80 à 120°C,
e. calcination à une température allant de 300 à 800°C, de préférence de 400 à 600°C et plus préférentiellement de 400 à 550°C.

La maturation peut, par exemple, être effectuée à température ambiante pendant 6 à 48 heures, de préférence de 12 à 24 heures, dans une enceinte hermétiquement close.

Un autre mode opératoire préféré pourrait consister en une imprégnation sur support inerte (type alumine, zircone, silice ou silice-alumine, oxyde de titane) d'un mélange de précurseurs de zinc et de précurseurs d de molybdène.

L'invention est illustrée plus en détails dans l'exemple non limitatif décrit ci-après.

### Exemple

On a préparé trois masses de captation :
- une première, M1, comparative, renfermant une phase active comprenant un oxyde simple ZnO
- une seconde, M2, comparative, renfermant une phase active comprenant un mélange d'oxydes simples ZnO - Mo03
- une troisième, M3, selon l'invention, renfermant une phase active comprenant un oxyde mixte ZnMo04.

### Préparation de la première masse de captation M1 (comparative) :

Un oxyde de zinc a été préparé par décomposition thermique d'un carbonate de zinc commercial (ZnCO₃)₂·(Zn(OH)₂)₃ (Aldrich, pureté > 58% Zn) .

Pour cela, le précurseur (ZnCO₃)₂·(Zn(OH)₂)₃ est placé dans une nacelle en porcelaine puis chauffé dans un four à moufle sous air. La rampe de température est de 4°C/min, jusqu'à un palier de 500°C maintenu pendant 2 heures.

La première masse de captation M1 (comparative) a ainsi été obtenue.

### Préparation de la seconde masse de captation M2 (comparative):

On a préparé un oxyde de zinc de le même manière que pour la masse de captation M1.

Un oxyde de molybdène disponible commercialement (Sigma-Aldrich, pureté ≥ 99,5%) a, en outre, été utilisé pour la préparation de la seconde masse de captation.

On a mélangé physiquement (broyage) des deux oxydes simples précédemment cités de manière à obtenir un mélange équimolaire d'oxydes simples ZnO-MoO₃ (ratio Zn/Mo=l).

La seconde masse de captation M2 a ainsi été obtenue.

### Préparation de la troisième masse de captation M3 :

On a préparé un oxyde de zinc de la même manière que pour la masse de captation M1, et sélectionné un oxyde de molybdène disponible commercialement (Sigma-Aldrich, pureté ≥ 99,5%) tel qu'utilisé pour la préparation de la masse de captation M2.

On a réalisé trois cycles de broyage puis calcination sous air à 500°C pendant 8 heures du mélange équimolaire des oxydes ZnO-MoO₃ pour obtenir un oxyde mixte ZnMoO₄.

Tous les solides de l'exemple (ZnO, ZnO-MoO₃ et ZnMoO₄) ont été caractérisés par diffraction des rayons X, et la détermination des phases cristallines a été effectuée par comparaison des diffractogrammes expérimentaux avec les fichiers des bases de données de diagrammes de diffraction des rayons X de l'ICDD (International Centre for Diffraction Data). Dans le cas des solides de l'exemple, les numéros de fiches pouvant être utilisées pour ces caractérisation sont, par exemple, les suivants : 01-070-8070 (ZnO), 04-012-8070 (MoO₃) et 01-070-5387 (ZnMoO₄).

Chaque solide a été évalué dans un banc d'analyse thermogravimétrique (étapes de sulfuration et régénération). La sulfuration est réalisée à l'aide d'un gaz constitué 0,9% en volume de H₂S dans H₂, à une température de 350°C, après une montée en température de 10°C/min, sous gaz inerte (He), et une pression de 1 bar.

Pour chaque solide, la régénération est réalisée au moyen d'un gaz constitué de 5% en volume d'O₂ dans l'azote, à des températures allant de 450 à 650°C, et une pression de 1 bar. La régénération a été conduite pendant 1 heure.

Après une première régénération, chaque masse de captation a été évaluée une seconde fois selon le protocole de sulfuration décrit dans la première étape.

Pour chaque solide, une quantification de la teneur en soufre par analyse élémentaire (combustion du solide à 900°C et analyse chromatographique du SO₂ formé) après chacune des trois étapes (première sulfuration, régénération, seconde sulfuration) a été réalisée.

Le Tableau 1 présente les valeurs mesurées pour les trois masses de captation de l'exemple, après chaque étape, et en fonction de la température de régénération.

**Tableau 1: Évolution des teneurs en soufre après les différentes étapes de l'exemple.**

| Masse de captation | Teneur en soufre (% massique) après la première désulfuration réalisée à 350°C | Température de régénération (°C) | Teneur en soufre (%massique) après la régénération | Teneur en soufre (%massique) après la seconde désulfuration réalisée à 350°C |
|---|---|---|---|---|
| M1 | 31,1 | 480 | 31,1 | - |
| | | 625 | 0,2 | 30,8 |
| M2 | 14,3 | 480 | 0,1 | 14,2 |
| M3 | 15,3 | 450 | 0,04 | 14,9 |

Ces résultats montrent que dans les conditions de l'exemple, la régénération de la masse de captation M1 n'est possible que pour une température supérieure ou égale à 625°C.

La régénération de M2 a, quant à elle, été possible pour à une température 480°C.

Enfin M3 a pu être régénérée dès 450°C.

Les analyses effectuées sur M1, M2 et M3 après la seconde sulfuration montrent que les solides, une fois régénérés, peuvent à nouveau être utilisés dans un procédé de désulfuration.

## Revendications

1. Procédé de captation d'impuretés soufrées, telles que l'H₂S et/ou le COS et/ou le CS₂, présentes dans des charges gazeuses comprenant de l'H₂ et/ou du CO, comprenant :
a. la désulfuration par mise en contact, à une température allant de 20 à 450°C, de la charge à traiter avec une masse de captation renfermant une phase active d'oxyde mixte ZnMoO₄,
b. optionnellement, l'inertage de la masse de captation sulfurée,
c. la régénération par voie oxydante de ladite masse de captation, opérée par mise en contact de la masse de captation à régénérer avec un gaz comprenant une teneur allant de 5 à 20% d'O₂ ;
d. optionnellement, l'inertage de la masse de captation régénérée, et
e. la désulfuration par mise en contact, à une température allant de 20 à 450°C, de la charge à traiter avec ladite masse de captation régénérée et inertée, **caractérisé en ce que** ladite masse de captation est régénérée à une température allant de 300 à 480°C.

2. Procédé selon la revendication 1, **caractérisé en ce que** les étapes de désulfuration de la charge à traiter par mise en contact de ladite charge avec la masse de captation sont mises en oeuvre à une température allant de 50 à 450°C, de préférence de 100 à 350°C.

3. Procédé selon l'une quelconque des revendications précédentes, **caractérisé en ce que** les étapes de désulfuration de la charge à traiter par mise en contact de ladite charge avec la masse de captation sont mises en oeuvre à une pression allant de 1 à 250 bar, de préférence de 10 à 150 bar, et plus préférentiellement de 15 à 80 bar.

4. Procédé selon l'une quelconque des revendications précédentes, **caractérisé en ce que** les étapes de désulfuration de la charge à traiter par mise en contact de ladite charge avec la masse de captation sont mises en oeuvre à une Vitesse Volumique Horaire (VVH) allant de 100 à 20 000h⁻¹, de préférence de 200 à 5 000h⁻¹, et plus préférentiellement de 300 à 3 000h⁻¹.

5. Procédé selon l'une quelconque des revendications précédentes, **caractérisé en ce que** le rapport molaire entre le zinc et le molybdène de la masse de captation est de 1 à 10, de préférence 1 à 5, et plus préférentiellement 1 à 2.

6. Procédé selon l'une quelconque des revendications précédentes, **caractérisé en ce que** les étapes d'inertage de la masse de captation sont opérées par mise en contact de la masse de captation avec un gaz inerte, de préférence l'azote, à une pression allant de 0,1 à 10 bar, de préférence de 0,5 à 3 bar.

7. Procédé selon l'une quelconque des revendications précédentes, **caractérisé en ce que** l'étape de régénération par voie oxydante est opérée à une pression allant de 0,1 à 10 bar, de préférence de 0,1 à 5 bar, et plus préférentiellement de 1 à 3 bar.

8. Procédé selon l'une quelconque des revendications précédentes, **caractérisé en ce que** l'étape de régénération par voie oxydante est opérée à une Vitesse Volumique Horaire (VVH) allant de 100 à 20 000h⁻¹, de préférence de 200 à 5 000h⁻¹, et plus préférentiellement de 300 à 3 000h⁻¹.

9. Procédé selon l'une quelconque des revendications précédentes, **caractérisé en ce que** la phase active représente de 30 à 100% en poids, par rapport au poids total de la masse de captation, de préférence de 40 à 95% en poids, et plus préférentiellement de 50 à 90% en poids.

10. Procédé selon l'une quelconque des revendications précédentes, **caractérisé en ce que** la masse de captation comprend, outre la phase active, au moins une charge minérale, par exemple une alumine ou un précurseur d'alumine, de la silice, une silice-alumine, une argile, une zircone ou un oxyde de titane.

11. Procédé selon la revendication précédente, **caractérisé en ce que** la charge minérale est une alumine alpha, et/ou une argile, par exemple l'argile de Provins.

12. Procédé selon l'une quelconque des revendications 10 ou 11, **caractérisé en ce que** la charge minérale est présente dans la masse de captation en une teneur allant de 0,1 à 70% en poids, de préférence de 5 à 60% en poids, et plus préférentiellement de 10 à 50% en poids, par rapport au poids total du solide.

13. Procédé selon l'une quelconque des revendications précédentes, **caractérisé en ce que** la masse de captation se présente sous la forme de granulés, de compacts, d'extrudés, de billes ou de monolithes.

## Patentansprüche

1. Verfahren zum Abtrennen von schwefelhaltigen Verunreinigungen, wie beispielsweise H₂S und/oder COS und/oder CS₂, die in gasförmigen Chargen, die H₂ und/oder CO umfassen, vorhanden sind:
a. Entschwefeln durch Inkontaktbringen bei einer Temperatur im Bereich von 20 bis 450 °C der zu behandelnden Charge mit einem Adsorbens, das eine aktive Mischoxidphase ZnMoO₄ beinhaltet,
b. optionales Inertisieren des schwefelhaltigen Adsorbens,
c. oxidatives Regenerieren des Adsorbens, das durchgeführt wird, indem das zu regenerierende Adsorbens mit einem Gas in Kontakt gebracht wird, das einen Gehalt im Bereich von 5 bis 20 % O₂ umfasst;
d. optionales Inertisieren des regenerierten Adsorbens, und
e. Entschwefeln durch Inkontaktbringen bei einer Temperatur im Bereich von 20 bis 450 °C der zu behandelnden Charge mit dem regenerierten und inertisierten Adsorbens,
**dadurch gekennzeichnet, dass** das Adsorbens bei einer Temperatur im Bereich von 300 bis 480 °C regeneriert wird.

2. Verfahren nach Anspruch 1, **dadurch gekennzeichnet, dass** die Entschwefelungsschritte der zu behandelnden Charge durch Inkontaktbringen der Charge mit dem Adsorbens bei einer Temperatur im Bereich von 50 bis 450 °C, vorzugsweise von 100 bis 350 °C, ausgeführt werden.

3. Verfahren nach einem der vorhergehenden Ansprüche, **dadurch gekennzeichnet, dass** die Entschwefelungsschritte der zu behandelnden Charge durch Inkontaktbringen der Charge mit dem Adsorbens bei einem Druck im Bereich von 1 bis 250 bar, vorzugsweise von 10 bis 150 bar und bevorzugter von 15 bis 80 bar, ausgeführt werden.

4. Verfahren nach einem der vorhergehenden Ansprüche, **dadurch gekennzeichnet, dass** die Entschwefelungsschritte der zu behandelnden Charge durch Inkontaktbringen der Charge mit dem Adsorbens bei einer Raumgeschwindigkeit pro Stunde (VHS) im Bereich von 100 bis 20.000 h⁻¹, vorzugsweise von 200 bis 5.000 h⁻¹ und bevorzugter von 300 bis 3.000 h⁻¹, ausgeführt werden.

5. Verfahren nach einem der vorhergehenden Ansprüche, **dadurch gekennzeichnet, dass** das Zink-Molybdän-Molverhältnis des Adsorbens 1 bis 10, vorzugsweise 1 bis 5 und bevorzugter 1 bis 2 beträgt.

6. Verfahren nach einem der vorhergehenden Ansprüche, **dadurch gekennzeichnet, dass** die Inertisierungsschritte des Adsorbens durchgeführt werden, indem das Adsorbens mit einem inerten Gas, vorzugsweise Stickstoff, bei einem Druck im Bereich von 0,1 bis 10 bar, vorzugsweise von 0,5 bis 3 bar, in Kontakt gebracht wird.

7. Verfahren nach einem der vorhergehenden Ansprüche, **dadurch gekennzeichnet, dass** der oxidierende Regenerierungsschritt bei einem Druck im Bereich von 0,1 bis 10 bar, vorzugsweise von 0,1 bis 5 bar und bevorzugter von 1 bis 3 bar, ausgeführt wird.

8. Verfahren nach einem der vorhergehenden Ansprüche, **dadurch gekennzeichnet, dass** der oxidierende Regenerierungsschritt bei einer Raumgeschwindigkeit pro Stunde (VHS) im Bereich von 100 bis 20.000 h⁻¹, vorzugsweise von 200 bis 5.000 h⁻¹ und bevorzugter von 300 bis 3.000 h⁻¹, ausgeführt wird.

9. Verfahren nach einem der vorhergehenden Ansprüche, **dadurch gekennzeichnet, dass** die aktive Phase 30 bis 100 Gew.-%, bezogen auf das Gesamtgewicht des Adsorbens, vorzugsweise 40 bis 95 Gew.-% und bevorzugter 50 bis 90 Gew.-% darstellt.

10. Verfahren nach einem der vorhergehenden Ansprüche, **dadurch gekennzeichnet, dass** das Adsorbens neben der aktiven Phase mindestens einen mineralischen Füllstoff, zum Beispiel ein Aluminiumoxid oder eine Aluminiumoxidvorstufe, Siliciumdioxid, ein Siliciumdioxid-Aluminiumoxid, einen Ton, ein Zirkonium oder ein Titanoxid umfasst.

11. Verfahren nach dem vorhergehenden Anspruch, **dadurch gekennzeichnet, dass** der mineralische Füllstoff ein Alpha-Aluminiumoxid und/oder ein Ton, zum Beispiel Provins-Ton, ist.

12. Verfahren nach einem der Ansprüche 10 oder 11, **dadurch gekennzeichnet, dass** der mineralische Füllstoff in dem Adsorbens in einem Gehalt zwischen 0,1 und 70 Gew.-%, vorzugsweise zwischen 5 und 60 Gew.-% und bevorzugter zwischen 10 und 50 Gew.-%, bezogen auf das Gesamtgewicht des Feststoffes vorliegt.

13. Verfahren nach einem der vorhergehenden Ansprüche, **dadurch gekennzeichnet, dass** das Adsorbens in Form von Granulaten, Presskörpern, Extrudaten, Kugeln oder Monolithen vorliegt.

## Claims

1. Process for capturing sulphur impurities, such as H₂S and/or COS and/or CS₂, present in gas feeds containing H₂ and/or CO, comprising:
a. desulphurisation by bringing the feed to be treated into contact, at a temperature of between 20 and 450°C, with a retaining material containing an active phase of ZnMoO₄ mixed oxide
b. optionally, rendering the sulphurised retaining material inert,
c. oxidative regeneration of said retaining material operated by contacting the capture mass to be regenerated with a gas comprising a content ranging from 5 to 20% of O₂
d. optionally, rendering the regenerated retaining material inert, and
e. desulphurisation by bringing the feed to be treated into contact, at a temperature of between 20 and 450°C, with said retaining material that has been regenerated and rendered inert,
**characterized in that** said retaining material is regenerated at a temperature of between 300 and 480°C.

2. Process according to claim 1, **characterised in that** the desulphurisation steps of the feed to be treated by bringing said feed into contact with the retaining material are performed at a temperature of between 50 and 450°C, preferably of between 100 and 350°C.

3. Process according to any one of the preceding claims, **characterised in that** the desulphurisation steps of the feed to be treated by bringing said feed into contact with the retaining material are performed at a pressure of between 1 and 250 bar, preferably between 10 and 150 bar, and more preferably between 15 and 80 bar.

4. Process according to any one of the preceding claims, **characterised in that** the desulphurisation steps of the feed to be treated by bringing said feed into contact with the retaining material are performed at an hourly volume rate (HVR) of between 100 and 20 000 h⁻¹, preferably of between 200 and 5 000 h⁻¹, and more preferably of between 300 and 3 000 h⁻¹.

5. Process according to any one of the preceding claims, **characterised in that** the molar ratio between zinc and molybdenum of the retaining material is between 1 and 10, preferably between 1 and 5, and more preferably between 1 and 2.

6. Process according to any one of the preceding claims, **characterised in that** the steps for rendering the retaining material inert are performed by bringing the retaining material into contact with an inert gas, preferably nitrogen, at a pressure of between 0.1 and 10 bar, preferably of between 0.5 and 3 bar.

7. Process according to any one of the preceding claims, **characterised in that** the oxidative regeneration step is performed at a pressure of between 0.1 and 10 bar, preferably of between 0.1 and 5 bar, and more preferably of between 1 and 3 bar.

8. Process according to any one of the preceding claims, **characterised in that** the oxidative regeneration step is performed at an hourly volume rate (HVR) of between 100 and 20 000 h⁻¹, preferably of between 200 and 5 000 h⁻¹, and more preferably of between 300 and 3 000 h⁻¹.

9. Process according to any one of the preceding claims, **characterised in that** the active phase represents between 30 and 100% by weight, in relation to the total weight of the retaining material, preferably between 40 and 95% by weight, and more preferably between 50 and 90% by weight.

10. Process according to any one of the preceding claims, **characterised in that** the retaining material comprises, apart from the active phase, at least one mineral filler, for example an alumina or an alumina precursor, silica, a silica-alumina, a clay, a zirconium oxide or a titanium oxide.

11. Process according to the preceding claim, **characterised in that** the mineral filler is an alpha-alumina, and/or a clay, for example Provins clay.

12. Process according to either of claims 10 or 11, **characterised in that** the mineral filler is present in the retaining material with a content of between 0.1 and 70% by weight, preferably of between 5 and 60% by weight, and more preferably of between 10 and 50% by weight, in relation to the total weight of the solid.

13. Process according to any one of the preceding claims, **characterised in that** the retaining material is present in the form of granules, compacts, extrudates, balls or monoliths.
